# EUROPEAN PATENT APPLICATION

(11) **EP 4 537 716 A1**
(43) Date of publication of application: **16.04.2025**
(21) Application number: 23203666.5
(22) Date of filing: 13.10.2023
(51) Int. Cl.: A47J 31/44, A47J 31/60

(54) **FROTHING MODULE FOR AIRCRAFT HOT BEVERAGE MAKER**

(71) Applicant: B/E Aerospace, Inc., Winston-Salem, NC 27105 (US)
(72) Inventor: PANJER, Frederik Adrian Stephan, Houten 3992 AD (NL)
(74) Representative: Dehns

(57) **Abstract**

A frothing module (1100) for a hot beverage maker (1000) including: a reservoir (1110) with a bottom portion (1111) for storing a liquid; and a frother (1120). The frother has a suction tube (1121) arranged within the reservoir (1110), extending from a top portion (1112) into the bottom portion (1111) of the reservoir (1110) to draw liquid from the bottom portion (1111). The frother (1120) also has: a steam inlet to connect to and receive steam from the hot beverage maker (1000); an aerator to receive liquid from the suction tube (1121) and steam from the steam inlet to make a froth; and an outlet to discharge the froth. The reservoir (1110) includes at least one aperture (1114) to receive steam for cleaning external surfaces of the suction tube (1121).

## Description

### TECHNICAL FIELD

This disclosure relates to frothing modules for hot beverage makers, and in particular to frothing modules for hot beverage makers installed in aircraft.

### BACKGROUND

Hot beverage makers in domestic environments and cafes typically include a frothing wand for producing frothed liquids, such as frothed milk. This frothing wand is usually designed, for example, to be inserted into a jug of milk and to emit steam when inserted so as to inject steam into the milk to make frothed milk.

Residual milk, or residue from other liquids, left on the frothing wand risks causing bacterial growth if not addressed. Therefore, it is important to clean the frothing wand regularly, for example between uses or every several uses. The frothing wand is usually cleaned by wiping down the frothing wand with a cloth.

In the aerospace industry, there are various requirements to consider in the design of a hot beverage maker that may not be as important in domestic settings and cafes. For example, it may be important to minimize the number of exposed containers, such as milk jugs, to reduce the risk of spills when the aircraft experiences a period of turbulence. Another example may be the relative importance of ensuring that the cabin crew is as efficient as possible, due to their limited time availability and the number of tasks that they are required to complete during the course of a flight.

### SUMMARY

When viewed from a first aspect, the present disclosure provides a frothing module for a hot beverage maker comprising:
a reservoir comprising a bottom portion arranged to store a liquid and a top portion; and
a frother comprising:
   a suction tube arranged within the reservoir and extending from the top portion into the bottom portion of the reservoir arranged to draw liquid up through the suction tube;
   a steam inlet arranged to be connected to and receive steam from a frothing nozzle of the hot beverage maker;
   an aerator arranged to receive liquid via the suction tube and steam via the steam inlet, and inject the steam into the liquid to make a froth; and
   an outlet arranged to discharge the froth;
wherein the reservoir includes at least one aperture arranged to receive steam for cleaning external surfaces of the suction tube from a respective cleaning nozzle of the hot beverage maker.

The frothing module provided by the first aspect of the disclosure enables steam cleaning of the frother, in particular the suction tube that is arranged within the reservoir, by the aperture(s) receiving steam for cleaning external surfaces of the suction tube at least. This may save a user, for example cabin crew on an aircraft, time and effort otherwise required to clean the frother manually. When steam cleaning occurs within the reservoir, where the suction tube is arranged, a user may be shielded from the steam used during the cleaning process. Further, any residue from the cleaning process may be collected in the reservoir for convenient disposal.

The frothing module may be a removable frothing module arranged to be removably connected to a hot beverage maker. For example, the frothing module may be removable so as to allow a user to fill the bottom portion of the reservoir with a liquid.

The frother may be removable from the reservoir. For example, so as to allow cleaning of the reservoir independently of the frother and/or so as to remove the frother to provide an opening for the bottom portion of the reservoir to be filled with a liquid.

The suction tube may be arranged to draw a liquid up through the suction tube as a result of a pressure differential created when steam is received by the steam inlet.

The aerator may inject the steam into the liquid passively. For example, the aerator may be shaped so as to passively inject steam into the liquid to make a froth when the aerator receives steam from the steam inlet and liquid from the suction tube.

The outlet may be arranged to discharge the froth externally to the reservoir. The outlet may therefore extend out of the reservoir. For example, the outlet may extend out of the reservoir to discharge froth into an external receptacle such as a milk jug, a coffee jug, a mug, a cup, or any receptacle suitable for receiving the froth.

In some examples, the outlet is movable between a first position and a second position; wherein when in the first position, the outlet is external to the reservoir so as to discharge the froth externally; wherein when in the second position the outlet is arranged within the reservoir; and wherein the at least one aperture is also arranged to receive steam for cleaning external surfaces of the outlet when the outlet is in the second position.

For example, the outlet may be rotatable between the first position and second position.

For example, the outlet may be movable between a first position and a second position independently of the frother and/or independently of the frothing module.

For example, when in the second position, the outlet may be arranged in the top portion of the reservoir.

In some examples, the frother further comprises a mechanism to bias the outlet into the first position. For example, this may be a spring, an actuator, or any appropriate mechanism for biasing the outlet towards the first position.

In some examples, the frother is movable between a beverage making position and a cleaning position; wherein when in the beverage making position, the suction tube is arranged within the reservoir with an end located in the bottom portion; and wherein when in the cleaning position, the suction tube is arranged within the reservoir with the end located in the top portion.

For example, the frother may be rotatable between the beverage making position and the cleaning position.

In some examples, when in the cleaning position, the outlet is arranged in the top portion of the reservoir.

In some examples, when in the cleaning position, the outlet is arranged in the second position.

In some examples, the reservoir defines a deflection feature arranged to move the outlet to the second position when the frother is moved to the cleaning position. For example, the deflection feature may be a groove arranged to direct the outlet into the second position when the frother is moved to the cleaning position.

In some examples, the at least one aperture is arranged in the top portion of the reservoir.

In some examples, the steam inlet of the frother comprises a push-fit connection arranged to be removably connected to the frothing nozzle of the hot beverage maker.

In some examples, the frother module is attached to the top portion of the reservoir. The frother may be removably attached to the top portion of the reservoir or permanently attached to the top portion of the reservoir.

In some examples, the reservoir is configured to substantially enclose the suction tube. For example, the reservoir may substantially enclose the suction tube when the frother is in the beverage making position and/or when the frother in the cleaning position. Further, the reservoir may also substantially enclose the outlet when the outlet is cleaned. For example, the reservoir may be configured to substantially enclose the outlet when the outlet is in the second position and/or when the frother is in the cleaning position.

When viewed from a second aspect, the present disclosure provides a hot beverage maker comprising:
the frothing module of any of the examples of the first aspect of the disclosure;
a frothing nozzle arranged to provide steam to the aerator of the frothing module via the steam inlet;
a cleaning nozzle for each of the at least one aperture of the frothing module in a position corresponding to the respective aperture arranged to direct steam to clean the external surfaces of the suction tube of the frothing module; and
one or more steam generators arranged to produce steam for the frothing nozzle and the cleaning nozzle(s).

In some examples, cleaning nozzle(s) is also arranged to direct steam to clean external surfaces of the outlet of the frother.

In some examples, the frothing nozzle comprises a push-fit connection arranged to be removably connected to the steam inlet of the frothing module.

In some examples, the steam generator is arranged to provide steam to both the cleaning nozzle(s) and the frothing nozzle. For example, the hot beverage maker may have a single steam generator for both the cleaning nozzle(s) and the frothing nozzle.

In some examples, the hot beverage maker further comprises a cleaning valve and a frothing valve to independently control steam supply respectively to the cleaning nozzle(s) and the frothing nozzle.

In some examples, when the cleaning nozzle(s) directs steam to clean the external surfaces of the suction tube, the frothing nozzle is also arranged to provide steam to clean internal surfaces of at least one of the aerator, the suction tube and the outlet. For example, the frothing nozzle may be arranged to provide steam to clean internal surfaces of at least two or more of the aerator, the suction tube and the outlet or all of the aerator, the suction tube and the outlet.

In some examples, the hot beverage maker further comprises an actuator for moving the frother between the beverage making position and the cleaning position.

When viewed from a third aspect, the present disclosure provides a hot beverage maker comprising:
a frothing nozzle arranged to be connected to and provide steam to a removable frothing module; and
at least one cleaning nozzle arranged to direct steam to clean external surfaces of the removable frothing module via a respective aperture of the removable frothing module; and
one or more steam generators arranged to produce steam for the at least one cleaning nozzle and the frothing nozzle.

The removable frothing module may be, for example, a frothing module according to any of the examples of the first aspect of the disclosure.

The hot beverage maker may be, for example, a hot beverage maker according to any of the example of the second aspect of the disclosure.

The hot beverage maker may comprise the removable frothing module. However, as the removable frothing module is removable, the hot beverage maker may be able to be connected to one of a plurality of removable frothing modules and thus this is not essential.

In some examples, the frothing module comprises a frother for making a froth.

In some examples, the at least one cleaning nozzle is arranged to direct steam to clean external surfaces of a suction tube of the frothing module, for example a suction tube of the frother, and/or an outlet of the frothing module, for example an outlet of the frother.

In some examples, the frothing nozzle comprises a push-fit connection arranged to be removably connected to the removable frothing module. For example, to a steam inlet of the removable frothing module, such as a steam inlet of the frother.

In some examples, the steam generator is arranged to provide steam to both the at least one cleaning nozzle and the frothing nozzle. For example, the hot beverage maker may have a single steam generator for both the at least one cleaning nozzle and the frothing nozzle.

In some examples, the hot beverage maker further comprises a cleaning valve and a frothing valve to independently control steam supply respectively to the at least one cleaning nozzle and the frothing nozzle.

In some examples, when the cleaning nozzle directs steam to clean external surfaces of the removable frothing module, the frothing nozzle is also arranged to provide steam to clean internal surfaces of the removable frothing nozzle. For example, the frothing nozzle may be arranged to provide steam to clean an aerator of the removable frothing module, such as an aerator of the frother. For example, the frothing nozzle may be arranged to provide steam to clean an outlet of the removable frothing module, such as an outlet of the frother. For example, the frothing nozzle may be arranged to provide steam to clean a suction tube of the removable frothing module, such as a suction tube of the frother.

In some examples, the hot beverage maker further comprises an actuator for moving the removable frothing module, for example a frother of the removable frothing module, between a beverage making position and the cleaning position.

### BRIEF DESCRIPTION OF DRAWINGS

One or more non-limiting examples will now be described, by way of example only, and with reference to the accompanying figures in which:
Figures 1a and 1b show a removable frothing module for a hot beverage maker which is suitable for use in aerospace applications;
Figures 2a and 2b show the hot beverage maker of Figure 1 when the frothing module is attached to the hot beverage maker, in Figure 2a a frother of the frothing module is in a beverage making position whereas in Figure 2b it is in a cleaning position;
Figures 3a and 3b show an outlet of the frother of Figures 1 and 2 respectively in a first position, for making a hot beverage, and a second position, for cleaning; and
Figures 4a and 4b show a top down view of the frothing module of Figures 1 to 3 including a deflection feature for rotating the outlet of the frother from the first position to the second position;
Figure 5 shows another view of the hot beverage maker including the frothing module of Figures 1 to 4; and
Figure 6 shows a push-fit connection between the frother of Figures 1 to 5 and the hot beverage maker of Figures 1 to 5.

### DETAILED DESCRIPTION

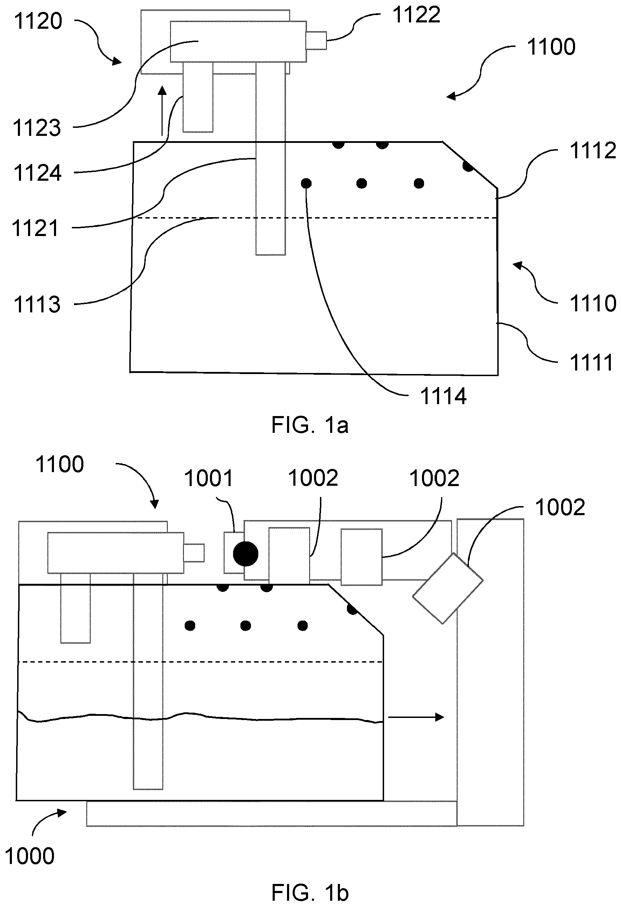

Figures 1a and 1b show a frothing module 1100 for a hot beverage maker 1000 which is suitable for use in aerospace applications. In this example the frothing module 1100 is a milk frothing module 1100 that includes a reservoir 1110 for storing milk and a frother 1120 for frothing the milk stored in the reservoir 1110 and providing the frothed milk to a receptacle (not shown), such as a coffee cup. In other examples, the frother 1100 could readily be used to froth other beverages such as hot chocolate, coffee or various other liquids.

The reservoir 1110 has a bottom portion 1111 and a top portion 1112. A division between the bottom portion and the top portion is illustrated by a dashed line 1113. The milk may be stored in the bottom portion 1111 of the reservoir 1110. In this example, the frother 1120 is removably attached to/from the top portion 1112 of the reservoir 1110. In this example, when the frother 1120 is removed from the reservoir 1110, the reservoir 1110 may be emptied and re-filled via an opening (not shown) which is exposed when the frother 1120 is removed.

Figure 1a shows the frother 1120 being removed, whereas Figure 1b shows the frother 1120 attached to the reservoir 1110. As the frother 1120 is removable from the reservoir 1110, either part may be replaced in the event that it is broken. A removable frother 1120 may enable use of the frother 1120 with one of several reservoirs 1110 so that a single frother 1120 can be moved between reservoirs 1110 when some of the reservoirs 1110 are cleaned and/or re-filled. For instance, cleaning and/or re-filling of the reservoirs 1110 may be performed independently of the frother 1120. While in this example the frother 1120 is removable, in other examples the frother 1120 is not removable and therefore alternate means, such as another opening and/or a hingeable lid etc. may be provided to re-fill the reservoir 1110 with a liquid, e.g. milk.

The frother 1120 has a suction tube 1121, the end of which extends into the bottom portion 1111 of the reservoir 1110 when the frother is attached to the reservoir 1110. As the suction tube 1121 extends into the bottom portion 1111 of the reservoir 1110, the end of the suction tube 1121 is positioned in the liquid, e.g. milk, stored in the reservoir 1110. In use, the suction tube 1121 sucks liquid from the reservoir 1110 into the frother's aerator 1123 where it is mixed with steam to froth the liquid. The frothed liquid, e.g. frothed milk. is then discharged externally to a receptacle via the frother's outlet 1124 to make a hot beverage.

The steam, which is mixed with the liquid, is provided to the aerator 1123 via the frother's steam inlet 1122 by the hot beverage 1000 maker. The steam inlet 1122 is designed to be removably attached to a frothing nozzle 1001 on the hot beverage maker 1000 with a push-fit connection. This push-fit connection may enable easy attachment to, and removal of, the steam inlet 1122 to/from the frothing nozzle 1001.

As the frothing module 1100 includes a reservoir 1110 and an integrated frother 1120, it is possible to froth the liquid, e.g. milk, stored in the reservoir 1110 without the risk of spilling the liquid in the process. Furthermore, by having a frother 1120 which is arranged to suck liquid directly from the reservoir 1110 and provide the frothed liquid directly to a receptacle, transfer of the frothed liquid to the receptacle may happen without requiring a user to pour, or otherwise transfer, the frothed liquid manually. This may reduce the risk of spilling hot frothed liquid and/or save a user's time.

Figures 1a and 1b also show several apertures 1114 in the top portion of the reservoir 1110. The position of these apertures 1114 corresponds with the position of several cleaning nozzles 1002 when the frothing module 1100 is attached to the hot beverage maker 1000. In order to clean the exterior of the frother 1120, steam is directed by the cleaning nozzles 1002 via the apertures 1114 onto the frother 1120. By directing steam onto the exterior of the frother 1120, liquid residue may be removed to prevent any bacterial growth on the frother 1120. The apertures 1114 are provided in the top portion 1112 of the reservoir 1110, where no liquid is stored, so as to prevent the liquid stored in the reservoir 1110 from leaking out.

This cleaning process may enable automated cleaning of the frother 1120 without requiring a user, such as a member of the cabin crew on an aircraft, to clean the frother 1120 manually. Furthermore, cleaning of the frother 1120 within the frothing module 1100 may protect users from steam which may be particularly important in aircraft environments where space is limited and turbulence may result in users losing their balance. Cleaning of the frother 1120 internally within the frothing module 1100 may allow any cleaning residue to collect in the reservoir 1110 for convenient storage and disposal.

In this example, internal cleaning of the frothing module 1120 is performed at the same time as external cleaning of the frothing module 1120 by directing steam through the aerator 1123, the suction tube 1121 and the outlet 1124, via the frothing nozzle 1001, at the same time as steam is directed to clear the exterior of the frother 1120 by the cleaning nozzles 1002.

When the end of the suction tube 1121 is submerged in liquid, stored in the bottom portion of the reservoir 1110, passing steam through the aerator 1123 creates a low pressure in the suction tube 1123 which draws milk up through the suction tube 1121. When the end of the suction tube 1121 is not submerged in liquid, steam provided by the frothing nozzle 1001 may pass down through the suction tube 1121 to clean it, as the end is not obstructed by the liquid.

In this example, the hot beverage maker 1000 has a steam generator (not shown) which produces steam for both the cleaning nozzles 1002 and the frothing nozzle 1001. As the steam generator is necessary to froth the liquid, also using the steam generator to clean the frother 1120 may allow steam cleaning of the frother 1120 while minimising the number of additional components required, thus minimizing space, cost and weight. In order to control the provision of steam from the generator to the frothing nozzle 1001 and the cleaning nozzles 1002 independently, the hot beverage maker 1000 has a cleaning valve (not shown) and a frothing valve (not shown). In this example, during the cleaning process both valves are opened to provide steam to both the frothing nozzle 1001 and the cleaning nozzles 1002 at the same time to clean the frother 1120 both internally and externally.

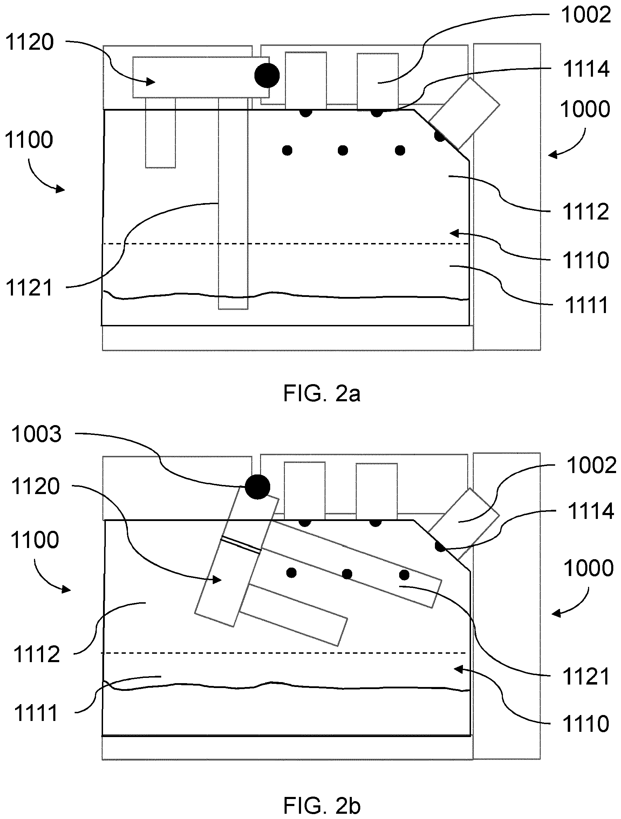

Figures 2a and 2b show the hot beverage maker of Figures 1a and 1b when the frothing module 1100 is attached to the hot beverage maker 1000.

In Figure 2a, the frother 1120 is in a beverage making position. In this position, the end of the suction tube 1121 is proximate to the bottom of the reservoir 1120 so that it is able to draw all, or almost all, of the liquid from the reservoir 1120 to froth the liquid.

In Figure 2b, the frother 1120 is in a cleaning position. In the cleaning position, the frother 1120 is rotated about a pivot point 1003. Rotation of the frother 1120 about the pivot point 1003 results in the end of the suction tube 1121 moving further from the bottom of the reservoir 1110. In this example, the frother 1120 is moved into the top portion 1112 of the reservoir 1110. This may result in the end of the suction tube 1121 being removed from any remaining liquid still present in the bottom portion 1111 of the reservoir 1110 before it is cleaned. Also, this may enable the suction tube 1121 to be moved closer to the apertures 1114 in the top portion of the reservoir 1110 so as to better clean the suction tube 1121. As will be apparent, apertures 1114 may not be able to be placed in the bottom portion 1111 of the reservoir 1110, where liquid is stored, as this may result in the liquid leaking out of the reservoir 1110.

In this example, rotation of the frother is performed by an actuator (not shown) of the hot beverage maker 1000. Actuation by an actuator may enable automated rotation of the frother 1120, which may be particularly convenient to save the time of users, e.g. aircraft cabin crew, and may enable fully automated cleaning of the frother 1120.

In order to clean the outlet 1124 of the frother, it may be helpful to position the outlet 1124 entirely within the reservoir 1110. This may enable any steam provided to clean the outlet 1124 internally to be collected in the reservoir 1110. This may also enable more of the exterior of the outlet 1124 to be cleaned by steam provided by the cleaning nozzles 1002.

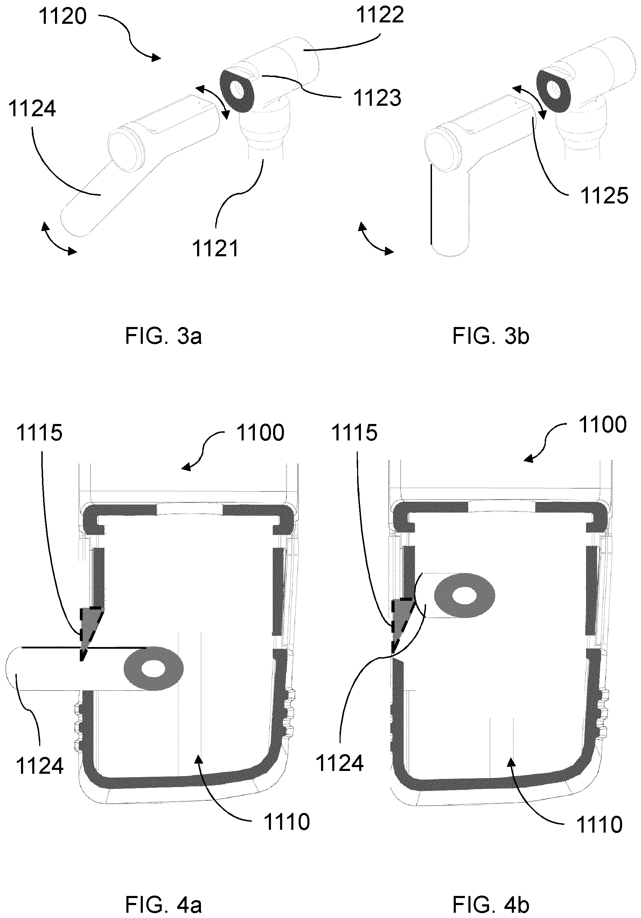

Figures 3a and 3b show the rotation of the outlet 1124 between a first position, shown in Figure 3a, and a second position, shown in Figure 3b. In the first position, the outlet 1124 is external to the reservoir so as to provide the frothed liquid, e.g. frothed milk, to an external receptacle, such as a coffee cup. In the second position, the outlet 1124 is internal to the reservoir so as to allow the outlet 1124 to be thoroughly cleaned. The frother 1120 includes a pivot joint 1125 to enable this rotation. The pivot joint 1125 includes a spring which biases the frother 1120 into the first position, so that the outlet is returned to the first position for making beverages when cleaning of the frother 1120 has been completed.

Figures 4a and 4b show a top down view of the frothing module 1100. A deflection feature 1115 of the reservoir 1110 is shown which causes the outlet 1124 to be rotated from the first position, shown in Figure 3a, to the second position, shown in Figure 3b, as the frother 1120 is rotated from the hot beverage making position, shown in Figure 2a, to the cleaning position, shown in Figure 2b. By having a deflection feature 1115, the outlet 1124 may be rotated into the second position without requiring actuation of the outlet 1124 into the second position independently from actuation of the frother 1120 into the cleaning position.

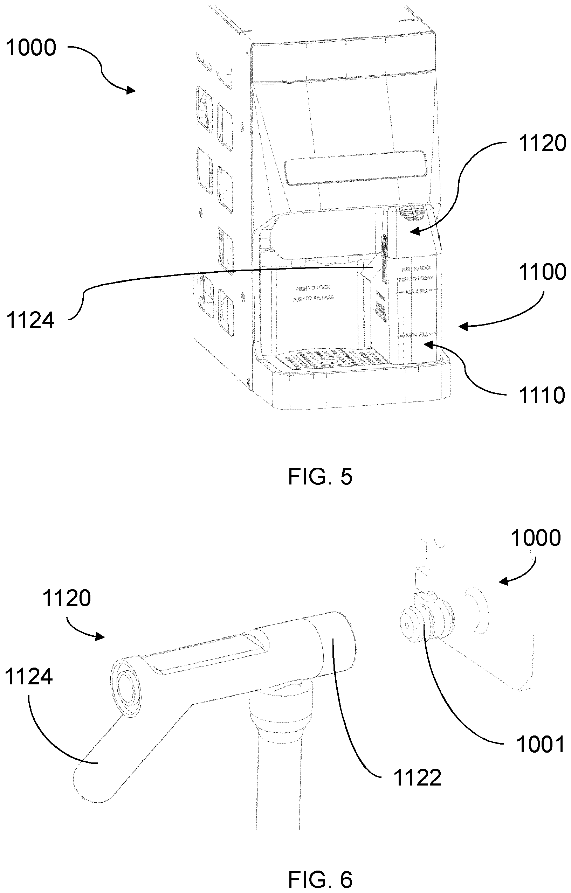

Figure 5 shows another view of the hot beverage maker 1000 with the frothing module 1100 connected. In Figure 5, the outlet 1124 of the frother 1120 is shown in the first position, corresponding to Figures 3a and 4a, such that the outlet 1124 is external to the reservoir 1110 to enable the frothed liquid, e.g. frothed milk, to be provided to an external receptacle via the outlet 1124.

Figure 6 shows the type of push-fit connection between the steam inlet 1122 of the frother 1120 and the frothing nozzle 1002 of the hot beverage maker 1000.

While the examples above have been described in relation to a milk frothing module 1100, it will be appreciated that any suitable liquid may be stored in the reservoir 1110 and drawn into the aerator to produce a froth. The liquid is preferably a foodstuff liquid. The liquid is preferably a milk-based liquid, for example a milk chocolate beverage or a milk-tea beverage or a milk-coffee beverage. The liquid can be milk (e.g. dairy milk, e.g. plant-derived milk).

## Claims

1. A frothing module for a hot beverage maker comprising:
a reservoir comprising a bottom portion arranged to store a liquid and a top portion; and
a frother comprising:
a suction tube arranged within the reservoir and extending from the top portion into the bottom portion of the reservoir arranged to draw liquid up through the suction tube;
a steam inlet arranged to be connected to and receive steam from a frothing nozzle of the hot beverage maker;
an aerator arranged to receive liquid via the suction tube and steam via the steam inlet, and inject the steam into the liquid to make a froth; and
an outlet arranged to discharge the froth;
wherein the reservoir includes at least one aperture arranged to receive steam for cleaning external surfaces of the suction tube from a respective cleaning nozzle of the hot beverage maker.

2. The frothing module of claim 1 wherein the outlet is movable between a first position and a second position;
wherein when in the first position, the outlet is external to the reservoir so as to discharge the froth externally;
wherein when in the second position the outlet is arranged within the reservoir; and
wherein the at least one aperture is also arranged to receive steam for cleaning external surfaces of the outlet when the outlet is in the second position.

3. The frothing module of claim 2 wherein the frother further comprises a mechanism to bias the outlet into the first position.

4. The frothing module of any preceding claim wherein the frother is movable between a beverage making position and a cleaning position;
wherein when in the beverage making position, the suction tube is arranged within the reservoir with an end located in the bottom portion; and
wherein when in the cleaning position, the suction tube is arranged within the reservoir with the end located in the top portion.

5. The frothing module of claim 4 when dependent on claim 2 wherein the reservoir defines a deflection feature arranged to move the outlet to the second position when the frother is moved to the cleaning position.

6. The frothing module of any preceding claim wherein the at least one aperture is arranged in the top portion of the reservoir.

7. The frothing module of any preceding claim wherein the steam inlet of the frother comprises a push-fit connection arranged to be removably connected to the frothing nozzle of the hot beverage maker.

8. The frothing module of any preceding claim wherein the frother is attached to the top portion of the reservoir.

9. The frothing module of any preceding claim wherein the reservoir is configured to substantially enclose the suction tube.

10. A hot beverage maker comprising:
the frothing module of any preceding claim;
a frothing nozzle arranged to provide steam to the aerator of the frothing module via the steam inlet;
a cleaning nozzle for each of the at least one aperture of the frothing module in a position corresponding to the respective aperture arranged to direct steam to clean the external surfaces of the suction tube of the frothing module; and
one or more steam generators arranged to produce steam for the frothing nozzle and the cleaning nozzle(s).

11. The hot beverage maker of claim 10 wherein the steam generator is arranged to provide steam to both the cleaning nozzle(s) and the frothing nozzle.

12. The hot beverage maker of claim 11 further comprising a cleaning valve and a frothing valve to independently control steam supply respectively to the cleaning nozzle(s) and the frothing nozzle.

13. The hot beverage maker of any one of claims 10 to 12 wherein when the cleaning nozzle(s) directs steam to clean the external surfaces of the suction tube, the frothing nozzle is also arranged to provide steam to clean internal surfaces of at least one of the aerator, the suction tube and the outlet.

14. The hot beverage maker of any one of claims 10 to 13 when dependent on claim 4 wherein the hot beverage maker further comprises an actuator for moving the frother between the beverage making position and the cleaning position.

15. A hot beverage maker comprising:
a frothing nozzle arranged to be connected to and provide steam to a removable frothing module; and
at least one cleaning nozzle arranged to direct steam to clean external surfaces of the removable frothing module via a respective aperture of the removable frothing module; and
one or more steam generators arranged to produce steam for the at least one cleaning nozzle and the frothing nozzle.
